# EUROPÄISCHE PATENTANMELDUNG

(11) **EP 2 832 490 A1**
(43) Veröffentlichungstag der Anmeldung: **04.02.2015**
(21) Anmeldenummer: 14178950.3
(22) Anmeldetag: 29.07.2014
(51) Int. Cl.: B23Q 1/01, F16C 29/08

(54) **Bearbeitungsmaschine**

(30) Priorität: 01.08.2013 DE 102013108314
(71) Anmelder: Grob-Werke GmbH & Co. KG, 87719 Mindelheim (DE)
(72) Erfinder: Grob, Burkhart, 86825 Bad Wörishofen (DE)
(74) Vertreter: Baumann, Rüdiger Walter

(57) **Zusammenfassung**

Die Erfindung betrifft eine Bearbeitungsmaschine für die spanabhebende Bearbeitung eines Werkstückes. Die Bearbeitungsmaschine weist einen Ständer auf. Der Ständer trägt eine entlang einer Führung verfahr- und positionierbare Motorspindel. Die Motorspindel sorgt für den rotativen Antrieb eines spanabhebenden Werkzeuges. An dem Ständer sind seitliche Ständerfüße angeordnet, über die sich der Ständer auf eine Unterlage abstützt. Die Motorspindel ist auf einem Motorspindelschlitten angeordnet, wobei zumindest das untere Ende des Motorspindelschlittens unterhalb der Ständerfüße positionierbar ist.

## Beschreibung

Die Erfindung betrifft eine Bearbeitungsmaschine für die spanabhebende Bearbeitung eines Werkstückes. Die Bearbeitungsmaschine weist einen Ständer auf, der eine entlang einer Führung verfahr- und positionierbare Motorspindel für den rotativen Antrieb eines Werkzeuges trägt. Für das Verfahren beziehungsweise das Positionieren der Motorspindel ist ein entsprechender Antrieb vorgesehen. Die Motorspindel selber dient dazu, ein spanabhebendes Werkzeug rotativ anzutreiben. Gattungsgemäße Bearbeitungsmaschinen sind hinlänglich bekannt. Sie dienen dazu, an Werkstücken, zum Beispiel an Zylinderköpfen oder Getriebegehäusen, eine Vielzahl von oftmals auch komplizierten spanabhebenden Bearbeitungen durchzuführen. Die gattungsgemäßen Bearbeitungsmaschinen werden dabei als Teil von Bearbeitungslinien, die durch entsprechende Verkettungs- oder Transportmittel miteinander verbunden sind oder auch als Universalmaschinen alleinstehend eingesetzt. Für ein effektives Bearbeiten des Werkstückes ist es dabei von Vorteil, dass das Werkstück relativ zum Werkzeug entlang einer Mehrzahl von Achsen hochgenau positioniert und bearbeitet werden kann. Es ist dabei bekannt, den Aufwand für die Realisierung der verschiedenen Linear- und Rotationsachsen zwischen dem Werkstück und der Motorspindel aufzuteilen. Die Bearbeitung erfolgt zum Beispiel durch ein Bohr- oder Fräswerkzeug, welches von einer Motorspindel gehalten und angetrieben wird. Das Bearbeitungswerkzeug rotiert dabei um eine Rotationsachse. Es ist dabei oftmals eine kartesische Ausgestaltung gewählt, das heißt, die drei rechtwinklig aufeinanderstehenden Raumachsen beschreiben auch die drei Linearachsen entlang der das Werkzeug und/oder das Werkstück positionierbar ist. Der Ständer weist dabei eine Führung für die verfahr- und positionierbare Motorspindel auf, die Längserstreckung dieser Führung entspricht der Y-Achse, hierzu rechtwinklig orientiert ist die Rotationsachse der (unverschwenkten) Motorspindel, die als Z-Achse beschrieben wird. Dabei kann die Orientierung der Z-Achse beziehungsweise der Rotationsachse der das Werkzeug tragenden Motorspindel im Raum vertikal, horizontal oder auch schräg hierzu verlaufend sein.

Der Aufbau der bekannten Bearbeitungsmaschinen ist dabei derart, dass die Motorspindel von einem Ständer getragen wird, der Ständer eine Führung in Y-Richtung für die Motorspindel zur Verfügung stellt. Der Ständer ruht dabei in geeigneter Weise auf dem Maschinenbett und dieses auf dem Fundament des Hallenbodens. Nachteilig bei diesen bekannten Bearbeitungsmaschinen ist, dass bei einer schrägen Bearbeitung von unten das Werkstück in einer höheren Position anzuordnen ist und gleichzeitig auch die Bearbeitungsmaschine deutlich höher und somit auch größer und aufwendiger bauen muss, damit mit der Motorspindel alle Bereiche des Werkstückes erreicht werden können. Die höhere vertikale Position des Werkstückes führt aber auch dazu, dass die Rüstplätze entsprechend höher zu legen sind, um einen Vertikaltransport des Werkstückes zu vermeiden. Dies kann zu entsprechenden Beeinträchtigungen bei dem Personal, welche die Werkstücke am Rüstplatz aufbaut, aufspannt oder abbaut, führen.

Aber auch bei den bekannten durch Verkettungs- oder Transportmittel miteinander verbundenen Bearbeitungsmaschinen, die in Bearbeitungslinien angeordnet sind, ist deutlich höherer Aufwand notwendig, wenn das Werkstück auf einer höheren Lage für eine Bearbeitung von schräg unten anzuordnen ist. Da der Transport der Werkstücke bei solchen Bearbeitungslinien automatisch erfolgt, sind entweder zusätzlich automatisch funktionierende Werkstückhebevorrichtungen vorzusehen oder aber die gesamte Verkettungslinie wird auf einem höheren Niveau realisiert mit entsprechendem zusätzlichen Materialaufwand.

Ausgehend von diesem Stand der Technik ist es Aufgabe der vorliegenden Erfindung eine Bearbeitungsmaschine wie eingangs beschrieben dahingehend zu verbessern, dass eine effektivere Raumausnutzung resultiert.

Zur Lösung dieser Aufgabe schlägt die Erfindung eine Bearbeitungsmaschine wie eingangs beschrieben vor, wobei an dem Ständer seitlich Ständerfüße angeordnet sind, über die sich der Ständer auf einer Unterlage, zum Beispiel einem Fundament, abstützt und die Motorspindel auf einem Motorspindelschlitten angeordnet ist und der Motorspindelschlitten auf der Führung verfahr- und positionierbar ist, wobei zumindest das untere Ende des Motorspindelschlittens unterhalb der Ständerfüße positionierbar ist.

Das Gewicht des Ständers stützt sich im Stand der Technik über Ständerfüße, die unterhalb des Ständers angeordnet sind, auf der Unterlage, zum Beispiel dem Fundament, ab. Die Ständerfüße befinden sich als tragendes Element an einem Querträger, der eine entsprechende Stärke besitzt und so die Bewegung nach unten begrenzt. Der erfindungsgemäße Vorschlag sieht nun vor, die Ständerfüße, über welche sich der Ständer abstützt, am Ständer seitlich anzuordnen, wodurch sich die Möglichkeit eröffnet, den durch den Querträger belegten Raum der Maschine für eine Absenkbewegung der auf dem Motorspindelschlittens angeordneten Motorspindel zu nutzen. Der erfindungsgemäße Vorschlag eröffnet die Möglichkeit, die Motorspindel deutlich tiefer abzusenken, als im Stand der Technik bekannt und so, zum Beispiel bei einer um eine horizontale Achse verkippten Motorspindel, auch eine Bearbeitung des Werkstückes von schräg unten zu erlauben, ohne die Höhenlage des Werkstückes im allgemeinen verändern zu müssen.

In einer bevorzugten Ausgestaltung ist vorgesehen, dass der Ständer entlang einer Linearführung verfahr- und positionierbar ist und die Linearführung gebildet ist von zwei parallel verlaufenden, zueinander beabstandeten Führungsschienen und sich der Ständer über die Ständerfüße auf den auf der Unterlage aufliegenden Führungsschienen abstützt.

Die Unterlage ist zum Beispiel der Hallenboden, als Unterlage wird aber auch das Fundament beschrieben. Die Erfindung umfasst dabei die Variante, bei welcher sich der Ständer direkt auf der Unterlage, also dem Fundament abstützt oder auf der Unterlage (Hallenboden, Fundament) Führungsschienen vorgesehen sind und der Ständer auf der Führungsschiene bewegbar positionierbar ist. Hierzu ist ein Antrieb an der Bearbeitungsmaschine vorgesehen, der so steuer- und regelbar ist, dass der Ständer an der gewünschten Position auf der Linearführung positionierbar ist. Bevorzugterweise ist die Linearführung so ausgebildet, dass diese die Z-Achse bildet, die Z-Achse beschreibt die Linearachse, die bei horizontal orientierter Rotationsachse der Motorspindel zu dieser parallel ist.

Da erfindungsgemäß vorgesehen ist, dass die Ständerfüße am Ständer seitlich angeordnet sind, sind auch die Führungsschienen der Linearführung seitlich vorgesehen und behindern nicht den Platz unterhalb des Ständers, der für die Verfahrbewegung des Motorschlittens frei bleibt.

In einer weiteren Variante des Vorschlages ist vorgesehen, dass die Führung gebildet ist von zwei parallel verlaufenden, zueinander beabstandeten Führungsleisten, wobei der Abstand dieser Führungsleiste geringer ist als der Abstand der Führungsschienen der Linearführung. Die Motorspindel ist entlang einer Führung am Ständer verfahr- und positionierbar. Die Ausgestaltung der Führung der Motorspindel mit zwei Führungsleisten führt zu einem sehr stabilen konstruktiven Aufbau der Lagerung des Motorspindelschlittens.

Durch die alternativ vorgeschlagene Variante, bei welcher der Abstand der Führungsleisten geringer ist als der Abstand der Führungsschienen (der Linearführung), wird in einfacher Weise konstruktiv erreicht, dass der Motorspindelschlitten zwischen den Führungsschienen der Linearführung nach unten verfahrbar und für Bearbeitungen von unten absenkbar ist.

Es ist klar, dass der Abstand der Führungsleisten und der Abstand der Führungsschienen in gleicher oder gleichwertiger Weise zu ermitteln ist. So ist zum Beispiel der Abstand jeweils definierbar über die lichte Weite der parallel verlaufenden inneren Kanten der Führungsschiene beziehungsweise Führungsleiste, auf welcher sich entweder der Ständer oder der Motorspindelschlitten abstützen.

Alterativ ist auch vorgesehen, dass der Motorspindelschlitten von einer verhältnismäßig breiten Führungsschiene abgestützt ist, in diesem Fall ist die Breite dieser Führungsleiste equivalent dem Abstand der zwei parallel verlaufenden Führungsleisten.

Vorteilhafterweise ist in einer weiteren Variante vorgesehen, dass sich die Führungsleisten am Ständer beidseits der Ständerfüße erstrecken. Die Führungsleiste der Führung des Spindelschlittens sind oberhalb und unterhalb der Ständerfüße des Ständers vorgesehen und erlauben es dadurch, dass zumindest das untere Ende des Motorspindelschlittens, bevorzugt die Rotationsachse oder der Schwerpunkt der Motorspindel unterhalb dem Höhenniveau der Ständerfüße absenkbar ist.

Vorteilhafterweise stützt sich der Ständer über eine Linearführung auf der Unterlage/Fundament ab. Die Linearführung ist dabei seitlich neben dem Ständer vorgesehen, da auch die Ständerfüße am Ständer seitlich angeordnet sind. Hieraus resultiert vorteilhafterweise eine Ausgestaltung der Linearführung derart, dass die Linearführung den unteren Bereich des Ständers U-artig oder kanalartig umfasst, wobei die Baugruppe der Linearführung zum Beispiel im wesentlichen einstückig ausgebildet ist, also die beiden Teile, die jeweils die Führungsschiene tragen, durch ein Mittelteil verbunden sind oder aber zwei getrennte Bauelemente, die je die Führungsschiene bilden, parallel verlaufend angeordnet sind und so den Ständer kanalartig umfassen. Die zuletzt genannte Variante hat dabei den Vorzug, dass ein Bauteil für die Bildung der linken und rechten Führungsschiene vorsehbar ist und zum Beispiel dieses Führungsschienenelement in geeigneter Weise, ohne Anordnung eines Mittelträgers am Fundament oder einer Tragplatte ausricht- und befestigbar ist.

Des Weiteren ist in einer Variante vorgesehen, dass an dem verfahrbaren Ständer mindestens eine erste Gliederschürze angeordnet ist, die den Bereich der Führungsschienen abdeckt, wo sich der Ständer nicht befindet. Zu beachten ist, dass die gattungsgemäßen Bearbeitungsmaschinen für die zerspanende Bearbeitung eingesetzt werden und die abgelösten Späne natürlich das positionsgenaue Verfahrens des Ständers nicht beeinträchtigen dürfen und durch die Anordnung einer Gliederschürze die Führungsschienen immer durch die Gliederschürze verdeckt ist, wobei die Gliederschürze gerade den Bereich nicht abdeckt, an welchem der Ständer sich gerade befindet. Hierdurch wird ein effektiver Schutz der Führungsschiene vor Verschmutzungen durch die Späne erreicht.

Alternativ ist auch an dem Motorspindelschlitten mindestens eine zweite Gliederschürze angeordnet, die den Ständer und/oder die Führungsleisten verkleidet oder abdeckt, wo sich der Motorspindelschlitten nicht befindet.

Die jeweils vorgeschlagenen Gliederschürzen sind dabei so angeordnet, dass sie gesamte Führungsleiste oder Führungsschiene umgreifen und an dem verfahrenbaren Element, entweder dem Ständer oder dem Motorspindelschlitten anschließen und von deren Bewegung bewegt werden. Daher sind an den Enden der Führungsleiste beziehungsweise Führungsschienen Umlenkelemente oder Umlenkrollen für die Gliederschürze vorgesehen. Der Vorteil des Einsatzes einer Gliederschürze liegt darin, dass diese immer alle nicht von dem Ständer beziehungsweise Motorspindelschlitten abgedeckten Bereiche flexibel und zuverlässig abdeckt.

Geschickterweise ist in einer weiteren Variante vorgesehen, dass die erste Gliederschürze vertikal orientiert die Führungsschiene abdeckt. Natürlich ist es möglich, die erste Gliederschürze auch so anzuordnen, dass diese horizontal orientiert die Führungsschiene abdeckt, wenngleich auf der sich hierdurch ausbildenden horizontalen Auflagefläche der Gliederschürze ein Auflagebereich für Späne bildet, was nicht günstig ist. Besser ist es, die Gliederschürze vertikal zu orientieren, da dann die Gefahr, dass hieran Späne haften bleiben, erheblich reduziert ist.

Zur Abtragung der Last ist die Führungsschiene vertikal belastet, also von oben her grundsätzlich zugänglich. Da die Gliederschürze geschickterweise so angeordnet wird, dass diese vertikal orientiert ist, wird die Oberseite der Führungsschiene durch eine Abdeckung geschützt, die geschickterweise zum Beispiel schräg orientiert ist, damit auf dieser aufliegende Späne leichter herabgleiten und entsorgt werden können.

Hieraus resultiert letztendlich eine Umhausung der Führungsschiene, die die Führungsschiene bis auf der dem Ständer zugeordneten Seite spandicht verdeckt, die dem Ständer zugeordnete Seite wird bevorzugterweise von der Gliederschürze abgedeckt.

Die auf der Oberseite der Führungsschiene vorgesehene Abdeckung liegt dabei nicht direkt auf der Führungsschiene auf, sondern ist vertikal davon derart beabstandet, dass der seitlich am Ständer angeordnete Ständerfuß hier eingreifen kann. Es bildet sich also oberhalb der Führungsschiene ein entsprechender Raum.

Des Weiteren umfasst die Erfindung auch die Verwendung der Gliederschürze zur Abdeckung der Führungsleiste oder der Führungsschiene wie gegenständlich für die Bearbeitungsmaschine beschrieben.

Durch den Einsatz der Gliederschürze wird ein sehr effektiver Schutz der für die Genauigkeit empfindlichen Führungsleiste beziehungsweise Führungsschiene zur Verfügung gestellt. An dieser Stelle wird darauf hingewiesen, dass alle Merkmale, die im Zusammenhang mit der Gliederschürze beschrieben worden sind, auch sinngemäß für die erfindungsgemäße Verwendung als mit offenbart und jeweils zur Erfindung gehörend anzusehen ist.

In der Zeichnung ist die Erfindung insbesondere in einem Ausführungsbeispiel schematisch dargestellt. Es zeigen:
Fig. 1 in einer dreidimensionalen Ansicht die erfindungsgemäße Bearbeitungsmaschine,
Fig. 2 in einer Draufsicht (entlang der Y-Achse nach Fig. 1) eine Ansicht der erfindungsgemäßen Bearbeitungsmaschine,
Fig. 3 in einer Ansicht (entlang der Z-Achse) die erfindungsgemäße Bearbeitungsmaschine.

In den Figuren sind gleiche oder einander entsprechende Elemente jeweils mit den gleichen Bezugszeichen bezeichnet und werden daher, sofern nicht zweckmäßig, nicht erneut beschrieben.

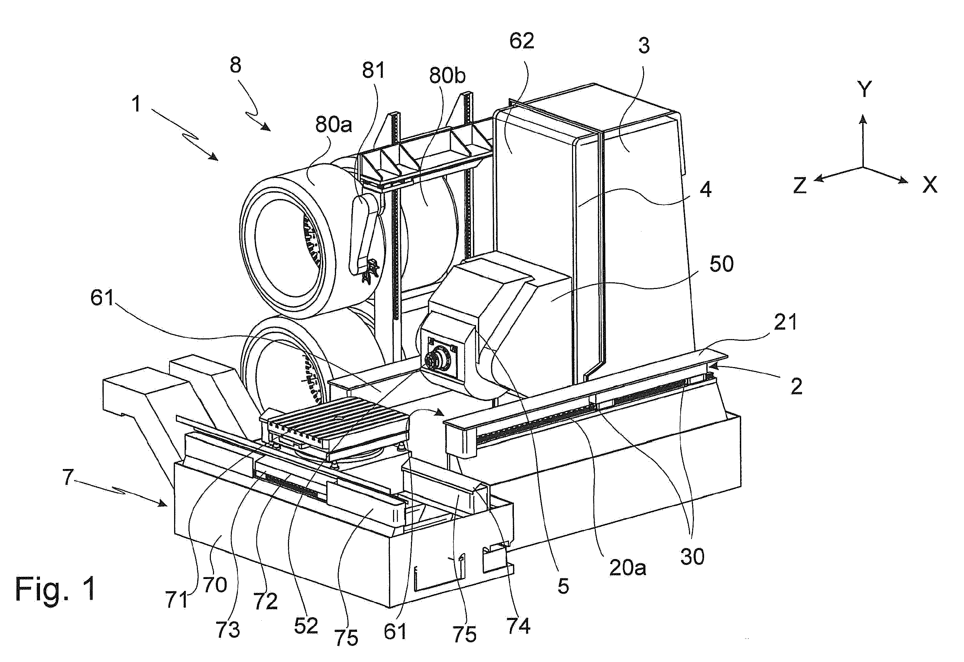

In Fig. 1 ist die erfindungsgemäße Bearbeitungsmaschine 1 in einem Ausführungsbeispiel gezeigt. Sie dient dazu ein hier nicht gezeigtes Werkstück spanabhebend zu bearbeiten. Das Werkstück liegt an einem Werkstückplatz 7 auf und ist dort positionsgenau aufgespannt. Die Bearbeitungsmaschine 1 weist einen Ständer 3 auf. An dem Ständer 3 ist eine Führung 4 vorgesehen, an welcher entlang der Motorspindelschlitten 50, der die Motorspindel 5 trägt, verfahrbar und positionierbar ist. Die Motorspindel 5 besitzt einen Spindelkopf 52, welcher zur Aufnahme des nicht gezeigten Werkzeuges dient.

Der Werkstückplatz 7 ist in Richtung der X-Achse beweg- und positionierbar, in dem Bett 70 des Werkstückplatzes 7 ist ein entsprechender Antrieb vorgesehen. Der Werkstückplatz 7 besitzt daher einen Werkstückschlitten 71, der sich über Schlittenfüße 72 auf parallel verlaufenden Schienen 73 abstützt. Die Oberseite der Schienen 73 ist mit einer feststehenden Abdeckung 74 vor den Spänen spandicht geschützt, es ist eine Gliederschürze 75 für jede Schiene 73 vorgesehen, die an dem Werkstückschlitten 71 befestigt ist und die Schiene 73 umschließt, die Gliederschürze 75 ist auf der Außenseite geschlossen, nur aus besserer Übersichtlichkeit hier geöffnet gezeigt, um die Lagerung der Schlittenfüße 72 auf der Schiene 73 zu zeigen.

Die hier dargestellte Lösung erlaubt es, dass das Werkstück am Werkstückplatz 7 entlang der X-Achse in beide Richtungen bewegund positionierbar ist, dabei bildet die X-Achse eine Achse des kartesischen Systems.

Die zweite Achse dieses kartesischen Systems ist die in vertikaler Richtung (Y-Achse) verlaufende Führung 4 der Motorspindel 5.

Die dritte Achse (Z-Achse) ist gebildet von der Linearführung 2, auf der der Ständer 3 sich abstützt. Natürlich ist ein entsprechender Antrieb für den Ständer 3 auf der Linearführung 2 vorgesehen. Die Linearführung 2 ist dabei gebildet von den beiden parallel verlaufenden Führungsschienen 20a, 20b, auf denen sich die Ständerfüße 30 des Ständers 3 abstützen.

Ähnlich wie die Schiene 73, die von der Gliederschürze 75 abgedeckt ist, ist auch die Führungsschiene 20a, 20b von einer ersten Gliederschürze 61 geschützt, die im gleichen Prinzip angeordnet ist und durch die Bewegung des Ständers 3 bewegt wird. Der Aufbau ist für beide Führungsschienen 20a, 20b gleich beziehungsweise identisch, die Oberseite der Führungsschiene 20a, 20b wird je von Abdeckungen 21 überragt, die auch über die Gliederschürze 61 vorstehen und diese abdecken.

Auch die Führung 4 am Ständer 3 wird durch eine an dem Motorspindelschlitten 50 anschließende zweite Gliederschürze 62, die in Gebrauchsstellung im wesentlichen vertikal orientiert ist, wie auch alle anderen Gliederschürzen, spandicht geschützt. Da die Gliederschürzen 61, 62, 75 an den jeweils bewegten Elementen (dem Werkstückschlitten 71, dem Ständer 3 beziehungsweise dem Motorspindelschlitten 50) in die jeweilige Bewegungsrichtung vorne und hinten angeschlossen ist, wird ein Teil der Gliederschürze 61, 62, 75 von dem bewegten Element geschoben und der andere Teil gezogen. Für die Gliederschürze 61, 62, 75 verbleibt es dabei bei der konstanten Länge und daher bei der spandichten Abdeckung des darunterliegenden Raumes.

Zusätzlich können Rotationsachsen, zum Beispiel im Werkstückplatz 7 und/oder in der Motorspindelhalterung oder Motorspindel 5 vorgesehen sein, durch die sich eine sehr variable Bearbeitung ergibt. Geschickterweise sind diese Rotationsachsen dann auch parallel zu den Linearachsen X, Y, Z des hier realisierten kartesischen Systems angeordnet. Gleichwohl ist die Erfindung auf diesen geometrischen Bezug nicht festgelegt. Die Achsen (Linearwie Rotationsachsen) können auch eine andere Raumorientierung zueinander aufweisen.

Neben dem Ständer 3 ist noch ein Werkzeugmagazin 8 vorgesehen, das aus zwei mal zwei Werkzeugscheiben 80a, b gebildet ist. Des Weiteren umfasst das Werkzeugmagazin 8 auch eine Werkzeugwechseleinheit 81, die dazu dient, Werkzeuge 83 aus den Werkzeugscheiben 80a, b in den Spindelkopf 52 einzusetzen, zu wechseln oder auszuwechseln und das ausgewechselte Werkzeug 83 wieder in die Werkzeugscheiben 80 des Werkzeugmagazines 8 zurückzulegen. Der Werkzeugwechseleinheit 81 ist dabei vertikal (in Richtung der Y-Achse) verfahrbar und besitzt einen angelenkten Hebel, mit dem zum einen an die jeweilige Position der Werkzeugscheiben 80a, b geschwenkt werden kann und zum anderen für den Einwechsel- beziehungsweise Auswechselprozess der Spindelkopf 52 erreichbar ist.

Durch die Anordnung eines Werkzeugmagazines 8 an der erfindungsgemäßen Bearbeitungsmaschine wird natürlich der Einsatzbereich einer solchen Bearbeitungsmaschine erheblich erweitert, da die hohe Flexibilität mit der Stellung der Motorspindel 5 relativ zum Werkstück es eröffnet, auch mit verschiedensten Werkzeugen, die in dem Werkzeugmagazin 8 vorgehalten werden, entsprechende Bearbeitung auszuführen.

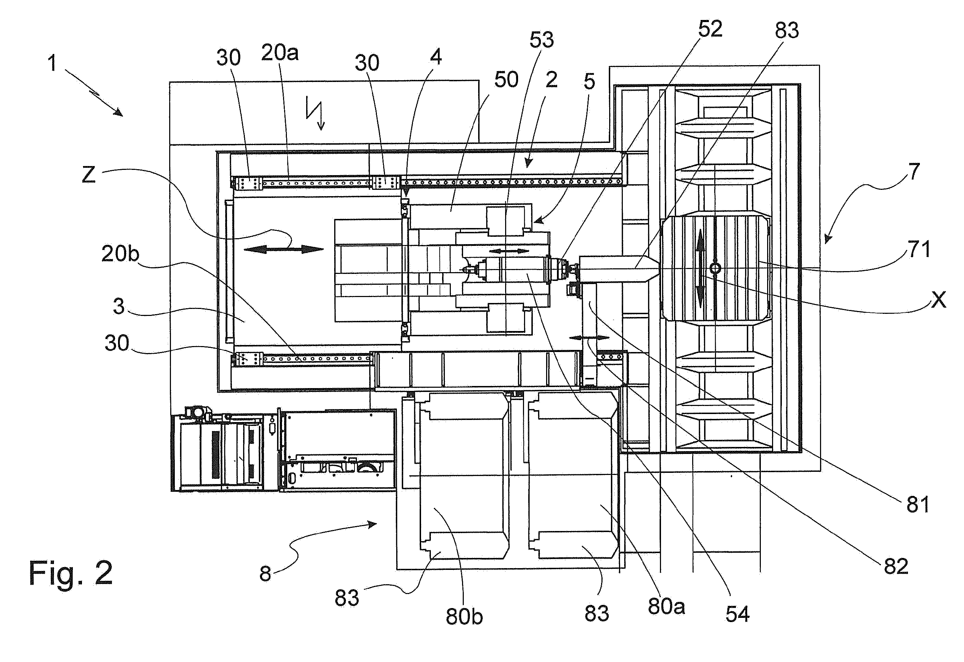

In Fig. 2 ist eine Draufsicht (in Richtung der Y-Achse) gezeigt. Die Beweglichkeit des Werkstückschlittens 71 ist mit dem Doppelpfeil X (parallel zur X-Achse des maschineninternen kartesischen Systems) gekennzeichnet.

Die Linearführung 2 ist gebildet von den beiden Führungsschienen 20a, 20b, die Beweglichkeit des Ständers 3 in Z-Richtung ist durch den Doppelpfeil Z angegeben.

Die Motorspindel 5 (als Baugruppe) ist in dem hier gezeigten Ausführungsbeispiel gebildet von dem Motorspindelschlitten 50, der die Werkzeugspindel 54 um eine Schwenkachse 53 beweglich drehbar (durch einen Antrieb lagegenau positionierbar) aufnimmt. Die Werkzeugspindel 54 dreht im hier gezeigten Ausführungsbeispiel den Spindelkopf 52. Unter Umständen ist hier auch noch eine Pinole vorgesehen, wodurch sich für die verschwenkte Werkzeugspindel 54 noch ein separater Vortrieb für das Werkzeug ergibt.

Die Werkzeugwechseleinheit 81 ist nicht nur in Richtung der Z-Achse linear beziehungsweise verschwenkbar beweglich, sondern, wie hier mit dem Doppelpfeil 82 angedeutet, auch parallel zur Z-Achse verfahrbar, um beide Werkzeugscheiben 80a, 80b, die im Ausführungsbeispiel in Richtung der Z-Achse gesehen hintereinander angeordnet sind, für das Einlegen und Abholen von Werkzeugen 83 zu erreichen.

In der in Fig. 2 gezeigten Stellung wird gerade von dem Werkzeugwechsler 81 ein Werkzeug 83 in den Spindelkopf 52 eingesetzt.

Es ist klar, dass die für die verschiedenen Bewegungen des Werkzeugwechslers 81 Verschwenk- beziehungsweise Linearantriebe vorgesehen sind.

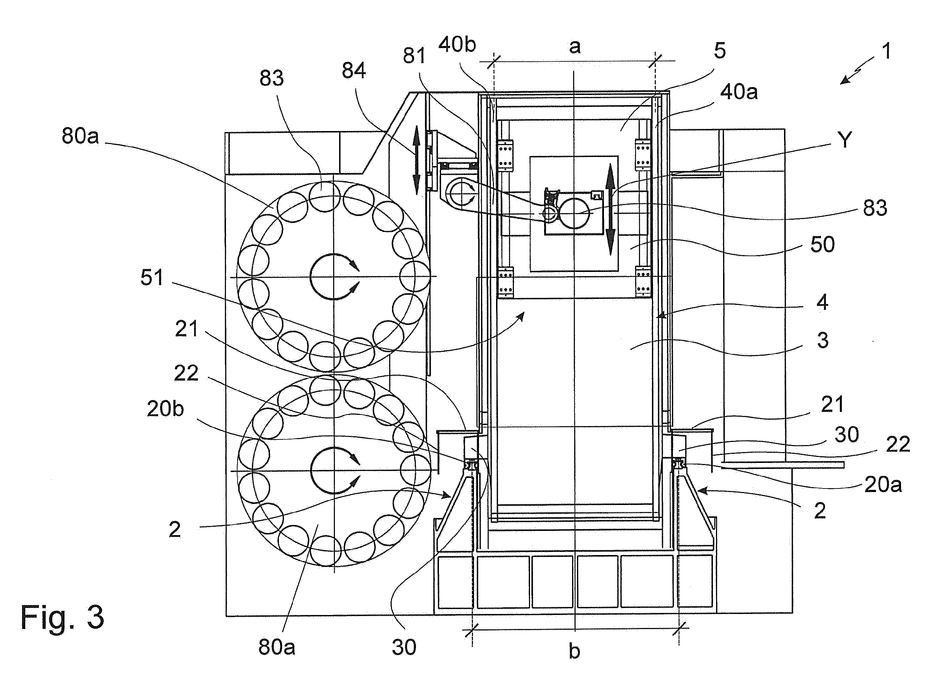

In Fig. 3 ist eine Ansicht in Richtung der X-Achse gezeigt, es ist gut zu erkennen, wie der Ständer 3 über die an ihm seitlich angeordneten Ständerfüße 30 auf den Führungsschienen 20a, 20b der Linearführung 2 abgestützt ist. Es ist eine Umhausung 22 für die Führungsschienen 20a, 20b vorgesehen, die auch eine obere Abdeckung 21 sowie seitliche Elemente aufweist, um die Führungsschienen 20a, 20b möglichst spandicht zu schützen. Komplettiert wird dies durch die Gliederschürze 61 (siehe Fig. 1).

In der in Fig. 3 gezeigten Stellung ist der Motorspindelschlitten 50 verhältnismäßig weit oben angeordnet, um den Wechsel des Werkzeuges 83 zu erlauben. Die Verfahrbarkeit des Motorspindelschlittens 50 in vertikaler Richtung ist mit dem Doppelpfeil Y (in Y-Richtung) gekennzeichnet.

Auch die Werkzeugwechseleinheit 81 ist in einer Richtung parallel zur Y-Achse (siehe Doppelpfeil 84) beweglich und positionierbar, um aus den Werkzeugscheiben 80a, b die entsprechenden Werkzeuge 83 aufnehmen beziehungsweise ablegen zu können.

Es ist gut zu erkennen, dass das untere Ende 51 des Motorspindelschlittens 50 unterhalb der Ständerfüße 30 absenkbar ist, da sich die Führungsschienen 20a, 20b seitlich neben dem Ständer 3 befinden. Erreicht wird dies dadurch, dass der Abstand a, der die Führung 4 bildenden Führungsleisten 40a, 40b geringer ist als der Abstand b der Führungsschienen 20a, 20b der Linearführung 2. Hieraus resultiert eine kanal- oder U-förmige Ausgestaltung der Linearführung 2, die den unteren Bereich des Ständers 3 umschließt oder umfasst.

Die Werkzeugscheiben 80 sind um eine horizontale Drehachse drehbar.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oderandere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merk-malen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mitanderen Merkmalen besonders günstige Ergebnisse erreichen.

## Patentansprüche

1. Bearbeitungsmaschine für die spanabhebende Bearbeitung eines Werkstückes, wobei die Bearbeitungsmaschine (1) einen Ständer (3) aufweist, der eine entlang einer Führung (4) verfahr- und positionierbare Motorspindel (5) für den rotativen Antrieb eines Werkzeuges trägt, wobei an dem Ständer (3) seitlich Ständerfüße (30) angeordnet sind, über die sich der Ständer (3) auf einer Unterlage, zum Beispiel einem Fundament, abstützt und die Motorspindel (5) auf einem Motorspindelschlitten (50) angeordnet ist und der Motorspindelschlitten (50) auf der Führung (4) verfahr- und positionierbar ist, wobei zumindest das untere Ende (51) des Motorspindelschlittens (50) unterhalb der Ständerfüße (30) positionierbar ist.

2. Bearbeitungsmaschine nach Anspruch 1, **dadurch gekennzeichnet, dass** der Ständer (3) entlang einer Linearführung (2) verfahr-und positionierbar ist und die Linearführung gebildet ist von zwei parallel verlaufenden, zueinander beabstandeten Führungsschienen (20a, 20b) und sich der Ständer (3) über die Ständerfüße (30) auf den, auf der Unterlage aufliegenden Führungsschiene (20a, 20b) abstützt.

3. Bearbeitungsmaschine nach Anspruch 1, **dadurch gekennzeichnet, dass** die Führung (4) gebildet ist von zwei parallel verlaufenden, zueinander beabstandeten Führungsleisten (40a, 40b), wobei der Abstand a dieser Führungsleisten (40a, 40b) geringer ist als der Abstand b der Führungsschienen (20a, 20b).

4. Bearbeitungsmaschine nach einem der vorhergehenden Ansprüche, **dadurch gekennzeichnet, dass** sich die Führungsleisten (40a, 40b) am Ständer beidseits der Ständerfüße (30) erstrecken.

5. Bearbeitungsmaschine nach einem der vorhergehenden Ansprüche, **dadurch gekennzeichnet, dass** die Linearführung (2) den unteren Bereich des Ständers (3) U-artig oder kanalartig umfasst.

6. Bearbeitungsmaschine nach einem der vorhergehenden Ansprüche, **dadurch gekennzeichnet, dass** an dem verfahrbaren Ständer (3) mindestens eine erste Gliederschürze (61) angeordnet ist, die den Bereich der Führungsschienen (20a, 20b) abdeckt, wo sich der Ständer (3) nicht befindet.

7. Bearbeitungsmaschine nach einem der vorhergehenden Ansprüche, **dadurch gekennzeichnet, dass** an dem Motorspindelschlitten (50) mindestens eine zweite Gliederschürze (62) angeordnet ist, die den Ständer (3) und/oder die Führungsleisten (40a, 40b) verkleidet oder abdeckt, wo sich der Motorspindelschlitten (50) nicht befindet.

8. Bearbeitungsmaschine nach einem der vorhergehenden Ansprüche, **dadurch gekennzeichnet, dass** die erste Gliederschürze (61) vertikal orientiert die Führungsschiene (20a, 20b) abdeckt.

9. Bearbeitungsmaschine nach einem der vorhergehenden Ansprüche, **dadurch gekennzeichnet, dass** die Führungsschiene (20a, 20b) auf der Oberseite eine Abdeckung (21) aufweist.

10. Bearbeitungsmaschine nach einem der vorhergehenden Ansprüche, **dadurch gekennzeichnet, dass** die Führungsschiene (20a, 20b) bis auf der dem Ständer (3) zugeordneten Seite durch eine Umhausung (22) spandicht verkleidet ist.
